# EUROPEAN PATENT SPECIFICATION

(11) **EP 2 596 854 B1**
(45) Date of publication and mention of the grant of the patent: **15.07.2015**
(21) Application number: 12192368.4
(22) Date of filing: 13.11.2012
(51) Int. Cl.: B01F 5/06, F01N 3/20

(54) **Mixing device for exhaust gas in automobile**
Mischvorrichtung für Abgas in einem Automobil
Dispositif de mélange de gaz d'échappement d'automobile

(30) Priority: 22.11.2011 KR 20110122359
(43) Date of publication of application: 29.05.2013
(73) Proprietor: HYUNDAI MOTOR COMPANY, Seoul 137-938 (KR); KIA MOTORS CORPORATION, Seoul 137-938 (KR)
(72) Inventor: Kim, Chang Dae, 446-562 Yongin-si (KR)
(74) Representative: Viering, Jentschura & Partner Patent- und Rechtsanwälte

(56) References cited:
- DE-A1-102007 009 890
- DE-A1-102007 012 790
- DE-A1-102008 029 809
- US-A- 1 113 041

## Description

### BACKGROUND

### (a) Technical Field

The present invention relates to a mixing device for an exhaust gas in an automobile, and more particularly, to a mixing device for an exhaust gas, capable of increasing a mixing property between the exhaust gas and a reducing agent by making the exhaust gas that passes through the mixing device be swirled doubly.

### (b) Background Art

Generally, an exhaust gas discharged from an engine through an exhaust manifold is guided to a Diesel Particulate Filter (Hereinafter, referred to as "DPF"), a Selective Catalystic Reduction device (Hereinafter, referred to as "SCR device"), or a NOx Storage Reduction catalyst (Hereinafter, referred to as "NSR catalyst"), which are provided on an exhaust gas pipe, and is purified, and further noise of the exhaust gas is attenuated while passing through a muffler and then the exhaust gas is discharged outside through a tail pipe.

Here, urea used generally as a reduction agent in the SCR device to be applied to an automobile among them is injected in a liquid drop state of a liquid into a discharged gas through an injector wherein an atomization degree of liquid and uniformity degree at a front end of catalyst affect a purification performance of NOx. That is, when an exhaust gas is swirled at a low level and the amount thereof is small, the urea is distributed unevenly to deteriorate a catalyst performance.

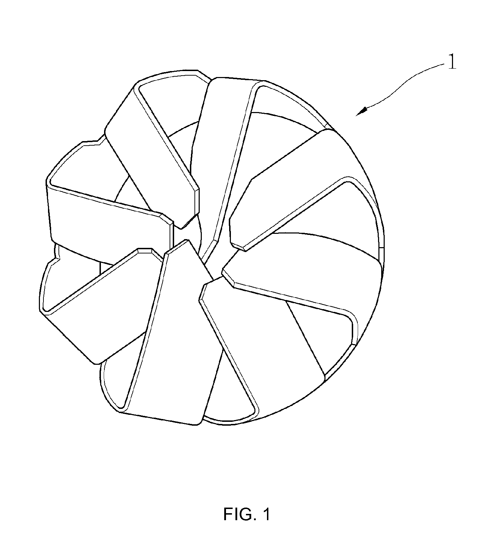

At this time, a diffusion device 1 for mixing the urea is provided on a discharging pipe in order to distribute uniformly the urea used as a reduction agent to improve a mixing property of the urea, as shown in FIG. 1 wherein in the prior diffusion device an exhaust gas flows to one direction and further the exhaust gas and the reduction agent are mixed through swirl at a rear end of the diffusion device.

However, according to the related art, the flow of the exhaust gas is defined as one direction and thus a secondary mixing property is not induced in the prior diffusion device, thereby deteriorating the mixing property.

US 1 113 041 A describes a gas mixer consisting of a circular disk, in which circles of openings and concentrically arranged deflecting blades are provided. The deflecting blades on the outer circle can be pitched in one direction, while the blades in another circle can be pitched in the opposite direction.

This document discloses the preamble of claim 1.

DE 10 2007 009890 A1 describes a static mixing element which has a grid-like component formed as a single-piece by bending a metal strip.

DE 10 2008 029809 A1 describes a mixing element having a deviation device arranged downstream of a grid-like component. The deviation device comprises multiple deviation elements which are inclined with respect to the plane of the grid-like component. The grid-like component includes multiple grid elements that are formed in a ring shape and arranged in concentric circles.

DE 10 2007 012790 A1 describes a static mixer having carrier elements and flow-guiding elements formed thereon. The flow-guiding elements comprise a slot-like notch.

The items described as the background art are provided just to help understanding of the background of the present invention, and shall not be construed to admit that they correspond to the technologies already known to those skilled in the art to which the present invention pertains.

### SUMMARY OF THE DISCLOSURE

The present invention has been made in an effort to solve the above-described problems associated with prior art. An object of the present invention is to provide a mixing device for an exhaust gas, capable of installing the mixing device for an exhaust gas within an exhaust gas pipe of an engine, diffusing evenly the exhaust gas and a reduction agent and inducing an even mixing of them. Specially, according to the mixing device for an exhaust gas, the exhaust gas that passes through the mixing device is induced to be swirled doubly and a turbulence form by the double of swirls accelerates atomization of the diffused particles of the reduction agent and particle vaporization effect, thereby enforcing the mixing property of the exhaust gas and the reduction agent.

The present invention provides a mixing device as defined in claim 1.

### BRIEF DESCRIPTION OF THE DRAWINGS

The above and other features of the present invention will now be described in detail with reference to certain exemplary embodiments thereof illustrated in the accompanying drawings which are given hereinbelow by way of illustration only, and thus are not limitative of the present invention, and wherein:
FIG. 1 is a perspective view illustrating a mixing device for exhaust gas in an automobile according to a related art;
FIG. 2 is a perspective view illustrating a mixing device for exhaust gas, not covered by claim 1.
FIG. 3 is a perspective view illustrating a frame member according to an exemplary embodiment of the present invention, not covered by claim 1.
FIG. 4 is a perspective view illustrating a frame member according to another embodiment of the present invention;
FIG. 5 is a perspective view illustrating a wing provided on a diffusion plate according to an exemplary embodiment of the present invention;
FIG. 6 is a perspective view illustrating a wing provided on a diffusion plate according to another exemplary embodiment of the present invention;
FIG. 7 is a view illustrating a state where a double of swirls of exhaust gas passed through a mixing device for exhaust gas are formed not covered by claim 1; and
FIG. 8 is a view illustrating a flow of exhaust gas at front and rear ends of the mixing device for exhaust gas according to an exemplary embodiment of the present invention.

It should be understood that the appended drawings are not necessarily to scale, presenting a somewhat simplified representation of various preferred features illustrative of the basic principles of the invention. The specific design features of the present invention as disclosed herein, including, for example, specific dimensions, orientations, locations, and shapes will be determined in part by the particular intended application and use environment.

In the figures, reference numbers refer to the same or equivalent parts of the present invention throughout the several figures of the drawing.

A thickness of lines and sizes of elements are exasperated for clarity and convenience for describing the invention. Further, the terminology used herein is for the purpose of describing particular embodiments only and is not intended to be limiting of example embodiments

### DETAILED DESCRIPTION

Hereinafter, a mixing device for exhaust gas according to an exemplary embodiment of the present invention will be described with reference to the accompanying drawings..

The mixing device for an exhaust gas is arranged in an exhaust gas pipe of an engine to induce uniform mixing of an exhaust gas and a reduction agent by diffusing evenly them and further make a double of swirls of the exhaust gas passed through the mixing device, thereby increasing a mixing property of the exhaust gas and the reduction agent.

Prior to describing the mixing device for an exhaust gas in detail according to the present invention, the mixing device may be varied in size so that it may be installed at any places within an exhaust gas pipe of an engine and further it may be provided as an insertion type or a fixing type. Specially, the fixing device may be arranged at a place where a flow of an exhaust gas is focused or a reduction agent needs to be diffused evenly according to a layout of an exhaust gas system.

Further, in describing the present invention, a front means a direction to which an exhaust gas is input to the mixing device and a rear means a direction to which the exhaust gas passes though the mixing device.

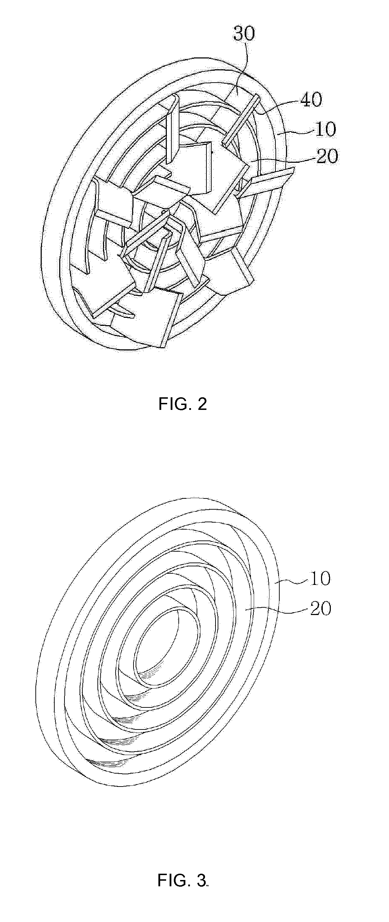

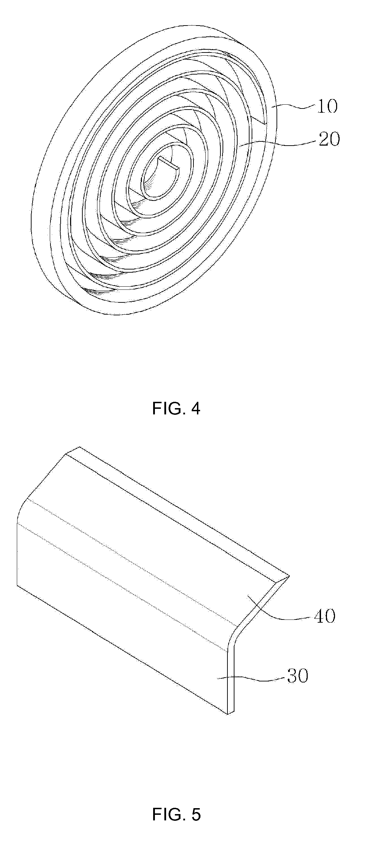

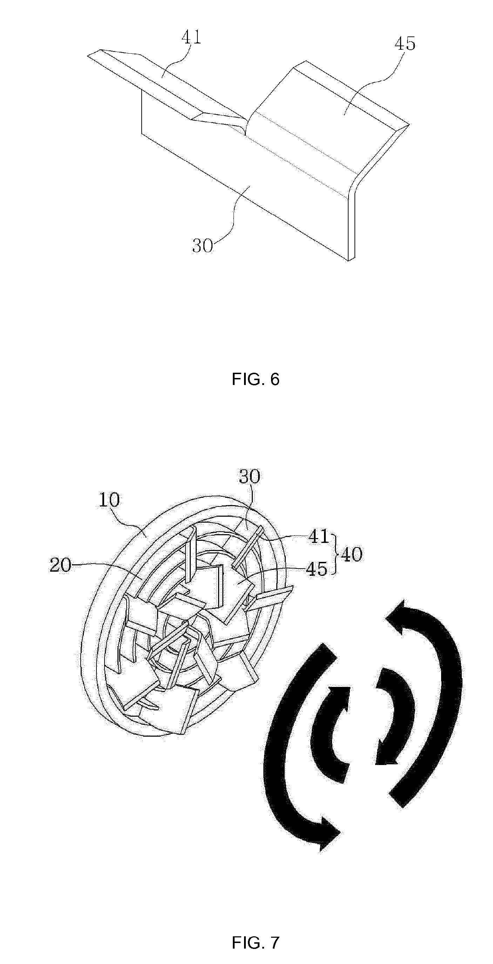

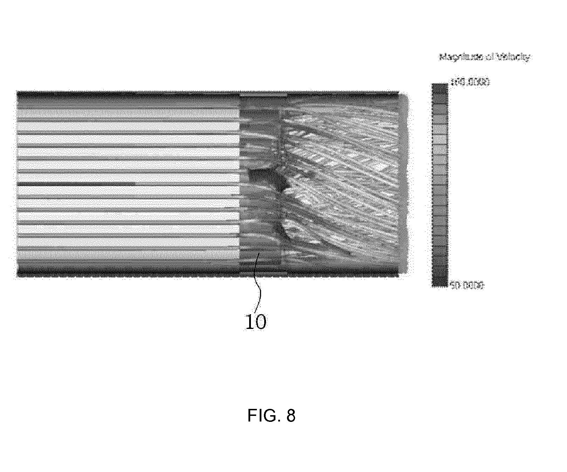

FIG. 2 is a perspective view illustrating a mixing device for an exhaust gas according to an exemplary embodiment FIG. 3 is a perspective view illustrating a frame member according to an exemplary embodiment , FIG. 4 is a perspective view illustrating a frame member according to an embodiment according to the present invention, FIG. 5 is a perspective view illustrating a wing provided on a diffusion plate according to an exemplary embodiment of the present invention, FIG. 6 is a perspective view illustrating a wing provided on a diffusion plate according to another exemplary embodiment of the present invention, FIG. 7 is a view illustrating a state where a double swirls of the exhaust gas passed through a mixing device for an exhaust gas are formed according to an exemplary embodiment of the present invention, and FIG. 8 is a view illustrating a flow of an exhaust gas at front and rear ends of the mixing device for an exhaust gas according to an exemplary embodiment of the present invention.

As shown in FIGS. 2 to 8, the mixing device that is arranged within an exhaust gas pipe and increases a mixing property of the exhaust gas and a reduction agent includes a hollow plate-typed flange that is arranged on a flow path of the exhaust gas, a frame member that is arranged at an inner part of the flange, and a diffusion plate that partitions the inner part of the flange wherein a wing is formed integrally with the diffusion plate to induce even mixing of the exhaust gas and the reduction agent by diffusing evenly them.

The flange 10 is formed as circular hollow plate type and is provided at an inner part of an exhaust gas pipe through which the exhaust gas flows.

Further, diameters of the frame member 20 decrease gradually toward inner part center of the flange 10.

That is, the frame member 20 is configured such that a plurality of hollow plates having a diameter smaller than that of the flange 10, respectively, and spaced at a predetermined distance wherein their diameters are decreased gradually toward a center of the flange 10, as shown in FIG. 3.

According to the invention, the frame member 20 is configured such that the other side is rolled to describe a circle toward a center while one side is in contact with an inner peripheral surface of the flange 10, as shown in FIG. 4.

Furthermore, the diffusion plate 30 is arranged to partition the inner part of the flange 10 for diffusing the reduction agent discharged through an injector.

That is, the diffusion plate 30 is configured such that the other side end is directed toward a center of the flange 10 while one side end is in contact with an internal peripheral surface of the flange 10 wherein a plurality of the diffusion plates are spaced at a predetermined distance along a circumferential direction of the flange 10, thereby partitioning the inner part of the flange into several parts.

Further, wings are attached to the diffusion plate 30, respectively, to make the swirl of the exhaust gas passed through the mixing device, thereby increasing the mixing property of the exhaust gas and the reduction agent.

As one example, as shown in FIG. 5, the wing 40 that is bent in clockwise or counter clockwise to have a predetermined angle with respect to the diffusion plate 30 is formed integrally with the diffusion plate 30 so that the exhaust gas passing through the inner side of the flange 10 is swirled.

That is, the wing 40 protrudes toward a rear of the mixing device formed integrally with the diffusion plate 30 while it is bent in a clockwise or a counter clockwise so that the exhaust gas passing through the mixing device is swirled at a rear of the mixing device, thereby mixing efficiently the exhaust gas and the reduction agent.

As another example, as show in FIG. 6, a first wing 41 that is bent in a clockwise and a second wing 42 that is bent in a counter clockwise while having a predetermined angle with respect to the diffusion plate 30 are formed integrally with the diffusion plate 30 so that the exhaust gas passing through the inner part of the flange 10 is swirled.

That is, when the exhaust gas passes through the first wing 41 and the second wing 45 formed integrally with the diffusion plate 30 of the mixing device of the present invention, a double of swirls produced at a rear of the mixing device are flowed in an opposite direction, thereby enforcing the mixing property of the exhaust gas and the reduction agent wherein the double of swirls are collided each other to form turbulence, thereby further accelerating atomization of the diffused particles of the reduction agent and particle vaporization effect.

Here, lengths and angles of the respective wings formed integrally with the diffusion plate 30 with respect to the diffusion plate may be adjusted to control a diffusion extent of the exhaust gas and the reduction agent.

Referring to an operation and effects of the mixing device for an exhaust gas according to the present invention, first, a size of the mixing device, lengths of the wings formed integrally with the diffusion plate, and the angle between the wing and the diffusion plate are adjusted properly in accordance to air displacement of an automobile engine and a layout of an exhaust gas system and then they are installed on an exhaust gas pipe.

The exhaust gas discharged from an exhaust gas port of a cylinder head is transferred to the exhaust gas system through an exhaust gas manifold.

Further, when the reduction agent in a liquid drop state is diffused from an injector in order to purify the exhaust gas, the swirl is induced at a rear of the mixing device while the reduction agent and the exhaust gas pass through the mixing device, thereby enforcing the mixing property of the exhaust gas and the reduction agent.

Furthermore, when the wings formed integrally with the diffusion plate are bent in a clockwise and a counter clockwise, a double of swirls each formed in an opposite direction are flowed at a rear of the mixing device, thereby enforcing further the mixing property of the exhaust gas and the reduction agent and the double of swirls are collided each other to form turbulence, thereby further accelerating atomization of the diffused particles of the reduction agent and particle vaporization effect.

According to the present invention, the mixing device for an exhaust gas is installed within an exhaust gas pipe of an engine, the exhaust gas and a reduction agent are diffused evenly and an even mixing of them is induced. Specially, according to the mixing device for an exhaust gas, the exhaust gas that passes through the mixing device is induced to be swirled doubly and a turbulence form by the double of swirls accelerates atomization of the diffused particles of the reduction agent and particle vaporization effect, thereby enforcing the mixing property of the exhaust gas and the reduction agent.

While the present invention has been illustrated and described with reference to specific embodiments, it is apparent to those skilled in the art to which the present invention pertains that the present invention may be variously improved and changed without departing from the scope of the present invention as defined in the claims.

## Claims

1. A mixing device for an exhaust gas, comprising:
a hollow plate-typed flange (10) that is arrangeable on a flow path of an exhaust gas;
a frame member (20) a diameter of which decreases gradually toward a center of the flange; and
a diffusion plate (30) that partitions the inner part of the flange (10) and is configured for diffusing an exhaust gas and a reduction agent injected if injected,
**characterized in that** the frame member (20) is configured such that the other side is rolled to describe a circle toward a center while one side is in contact with an inner peripheral surface of the flange.

2. The mixing device for an exhaust gas of claim 1, wherein the diffusion plate (30) is configured such that the other side end is directed toward a center of the flange (10) while one side end is in contact with an internal peripheral surface of the flange (10) wherein a plurality of the diffusion plates are spaced at a predetermined distance along a circumferential direction of the flange.

3. The mixing device of claim 2, wherein wings each of which is bent in clockwise or counter clockwise to have a predetermined angle with respect to the diffusion plate (30) is formed integrally with the diffusion plate (30) so that an exhaust gas passing through the inner side of the flange (10) is swirled.

4. The mixing device of claim 2, wherein a first wing that is bent in a clockwise and a second wing that is bent in a counter clockwise while having a predetermined angle with respect to the diffusion plate (30) are formed integrally with the diffusion plate (30) so that an exhaust gas passing through the inner part of the flange (10) is swirled.

## Patentansprüche

1. Mischvorrichtung für ein Abgas, aufweisend:
einen hohlen plattenartigen Flansch (10), der in einem Strömungspfad eines Abgases anbringbar ist;
ein Rahmenelement (20), dessen Durchmesser in Richtung zu einer Mitte des Flansches allmählich abnimmt; und
eine Diffusionsplatte (30), die den Innenteil des Flansches (10) teilt und zum Diffundieren eines Abgases und, wenn eingespritzt, eines eingespritzten Reduktionsmittels konfiguriert ist,
**dadurch gekennzeichnet, dass**
das Rahmenelement (20) derart konfiguriert ist, dass die andere Seite gerollt ist, um einen Kreis in Richtung zu einer Mitte zu beschreiben, während die eine Seite mit einer Innenumfangsfläche des Flansches in Kontakt ist.

2. Mischvorrichtung für ein Abgas nach Anspruch 1, wobei die Diffusionsplatte (30) derart konfiguriert ist, dass das andere Seitenende in Richtung zu einer Mitte des Flansches (10) ausgerichtet ist, während das eine Seitenende mit einer Innenumfangsfläche des Flansches (10) in Kontakt ist, wobei eine Mehrzahl der Diffusionsplatten in einem vorbestimmten Abstand entlang einer Umfangsrichtung des Flansches angeordnet sind.

3. Mischvorrichtung nach Anspruch 2, wobei Flügel, von denen jeder im Uhrzeigersinn oder entgegengesetzt zum Uhrzeigersinn gebogen ist, um einen vorbestimmten Winkel in Bezug auf die Diffusionsplatte (30) zu haben, einstückig mit der Diffusionsplatte (30) ausgebildet sind, so dass ein Abgas, das durch die Innenseite des Flansches (10) hindurchtritt, verwirbelt wird.

4. Mischvorrichtung nach Anspruch 2, wobei ein erster Flügel, der in einem Uhrzeigersinn gebogen ist, und ein zweiter Flügel, der entgegengesetzt zu einem Uhrzeigersinn gebogen ist, während sie einen vorbestimmten Winkel in Bezug auf die Diffusionsplatte (30) haben, einstückig mit der Diffusionsplatte (30) ausgebildet sind, so dass ein Abgas, das durch den Innenteil des Flansches (10) hindurchtritt, verwirbelt wird.

## Revendications

1. Dispositif de mélange de gaz d'échappement, comprenant :
une bride du type plaque creuse (10) qui peut être disposée dans un chemin de circulation des gaz d'échappement ;
un élément cadre (20) dont le diamètre diminue de manière progressive vers le centre de la bride ; et
une plaque de diffusion (30) qui partage la partie intérieure de la bride (10) et qui est configurée de façon à diffuser les gaz d'échappement et un agent de réduction injecté s'il est injecté ;
**caractérisé en ce que** :
l'élément cadre (20) est configuré de telle sorte que l'autre côté soit enroulé de façon à décrire un cercle vers le centre tandis qu'un côté se trouve en contact avec une surface périphérique intérieure de la bride.

2. Dispositif de mélange de gaz d'échappement selon la revendication 1, dans lequel la plaque de diffusion (30) est configurée de telle sorte que l'autre extrémité latérale soit dirigée vers le centre de la bride (10) tandis qu'une extrémité latérale se trouve en contact avec une surface périphérique intérieure de la bride (10), dans lequel une pluralité de plaques de diffusion sont espacées à une distance prédéterminée le long de la direction circonférentielle de la bride.

3. Dispositif de mélange selon la revendication 2, dans lequel des ailettes, chacune d'elle étant fléchie dans le sens des aiguilles d'une montre ou dans le sens inverse des aiguilles d'une montre de façon à faire un angle prédéterminé par rapport à la plaque de diffusion (30), sont formées d'une pièce avec la plaque de diffusion (30) de telle sorte que les gaz d'échappement qui passent à travers le côté intérieur de la bride (10), tourbillonnent,

4. Dispositif de mélange selon la revendication 2, dans lequel une première ailette qui est fléchie dans le sens des aiguilles d'une montre et une seconde ailette qui est fléchie dans le sens inverse des aiguilles d'une montre tout en formant un angle prédéterminé par rapport à la plaque de diffusion (30), sont formées d'une pièce avec la plaque de diffusion (30) de telle sorte que les gaz d'échappement qui passent à travers la partie intérieure de la bride (10), tourbillonnent.
